# EUROPEAN PATENT APPLICATION

(11) **EP 4 286 856 A1**
(43) Date of publication of application: **06.12.2023**
(21) Application number: 21921773.4
(22) Date of filing: 28.01.2021
(51) Int. Cl.: G01N 35/00, G01N 35/04

(54) **SAMPLE RACK MANIPULATION DEVICE, TESTING SYSTEM AND TESTING METHOD AND COMPUTER-READABLE MEDIUM**

(71) Applicant: Beckman Coulter Laboratory Systems (Suzhou) Co. Ltd., Suzhou, Jiangsu 215021 (CN)
(72) Inventor: JI, Zhi, Suzhou, Jiangsu 215021 (CN); LIN, Chuan, Suzhou, Jiangsu 215021 (CN); XU, Cungang, Suzhou, Jiangsu 215021 (CN); YAMAMOTO, Tetsuya, Suzhou, Jiangsu 215021 (CN); ZHU, Weidong, Suzhou, Jiangsu 215021 (CN)
(74) Representative: Maiwald GmbH
(86) International application number: PCT/CN2021/074071
(87) International publication number: WO 2022/160153

(57) **Abstract**

A sample rack manipulation device (10), a testing system (1) and a testing method using the sample rack manipulation device (10), and a computer-readable medium implementing the testing method. The sample rack manipulation device (10) comprises: a loading/unloading zone (TA) in which a plurality of sample racks (50) carrying sample containers (51) containing samples can be arranged side by side; a sampling zone (TD, TE) in which samples in each sample container (51) on the sample racks (50) are sampled by an automatic testing apparatus; and a docking device (114) configured to transfer the sample racks (50) between the loading/unloading zone (TA) and the sampling zone (TD, TE). The docking device (114) is configured to be able to remove the sample racks (50) loaded in the loading/unloading zone (TA) in any order and to transfer the removed test sample racks (50) to the sampling zone (TD, TE) for sampling.

## Description

### FIELD

The present application relates to the field of medical technology, and in particular to a sample rack manipulation device, a sample testing system and a sample testing method using the sample rack manipulation device, and a computer-readable medium allowing the sample testing method to be implemented.

### BACKGROUND

The contents of this section only provide background information related to the present application, which may not necessarily be the prior art.

Various analytical testing instruments for testing samples in test tubes or cups are indispensable in the medical field, especially clinical medicine and laboratory medicine. In a case of a large number of samples, there are requirements for the processing capacity of biochemical testing instruments. A full-automatic biochemical analysis and testing apparatus has become an essential testing apparatus for modern medical institutions, since manual operations are not needed and a testing speed is high.

In the conventional technology, a full-automatic biochemical analysis and testing apparatus capable of batch processing is usually closed, and includes a loading port, a sample rack manipulation device, a sampling part, a testing part and an unloading port. In use, an operator only needs to load one or more sample racks carried with test tubes (or cups) containing samples into the testing apparatus from the loading port and to start the testing apparatus. At this time, the sample rack manipulation device of the testing apparatus can transfer a single sample rack to the sampling part in a sequence of loading, and the samples contained in one or more test tubes carried on the sample rack can be sampled and tested separately. After all the test tubes on the sample rack have been sampled, the sample rack manipulation device transfers the sample rack sampled to the unloading port, and transfers a next sample rack from the loading port to the sampling part for sampling and testing.

### SUMMARY

### Technical problems to be solved

The full-automatic testing apparatus described above is only able to firstly test a sample rack which is firstly loaded in sequence, but cannot cope with unexpected situations, such as a case in which it is desired to preferentially deal with a sample loaded later. As a result, the sample loaded later can only wait in line. In view of this issue, it is proposed a solution of providing an emergency sample insertion function in a testing apparatus to give priority to emergency sample testing. For this solution, it is required to additionally provide an emergency sample insertion port, which makes the apparatus complicated. In addition, since the processing capacity of the emergency sample insertion port is limited, it is only applicable to give priority to several samples, which apparently cannot solve the problem fundamentally.

In addition, it is difficult to integrate different testing apparatus into a system to share a sample rack manipulation device, since the sample rack manipulation device cannot distribute the sample racks as needed and the testing time of different testing apparatuses for a single sample is different.

The present application is provided in view of the fact that the conventional full-automatic testing apparatus transfers the sample racks in sequence (i.e., unselective) and thus cannot reasonably plan the transferring process of the sample racks according to testing priorities of the sample racks, and the fact that the simple sequential transfer workflow makes it difficult to optimize and integrate different testing apparatuses.

An object of the present application is to provide a novel sample rack manipulation device that can reasonably determine a transferring and testing order of a plurality of loaded sample racks based on the testing priorities of the sample racks.

Another object of the present application is to further improve the sample rack manipulation device of a testing system, so as to realize the multiplying of the working capacity of the testing system without increasing the size of the sample rack manipulation device.

Yet another object of the present application is to provide a sample rack manipulation device with good compatibility, which allows the combination of two testing apparatuses with different testing rates.

Still yet another object of the present application is to provide a testing system and a testing method using the sample rack manipulation device, and a computer-readable medium allowing the sample testing method to be implemented.

### Solutions for solving problems

According to an aspect of the present application, a sample rack manipulation device for an automatic testing apparatus is provided. The sample rack manipulation device includes a loading/unloading area configured to accommodate multiple sample racks arranged side by side, wherein each of the multiple sample racks is configured to carry one or more sample containers containing samples; a sampling area in which a sample in each sample container on the sample rack is sampled by the automatic testing apparatus; and a shuttle configured to transfer the sample rack between the loading/unloading area and the sampling area, wherein the shuttle is configured to pick out arbitrarily a sample rack to be tested which has been loaded in the loading/unloading area and transfer the picked-out sample rack to be tested to the sampling area for sampling. With the shuttle configured as described above, it is allowed to flexibly transfer the sample rack for sampling based on an instruction or a set order.

In some embodiments, the shuttle may be configured to transfer sample racks to be tested which have been loaded in a same batch in the loading/unloading area to the sampling area in an order from left to right.

In some embodiments, an emergency channel may be arranged in the loading/unloading area, and the shuttle is configured to preferentially transfer a sample rack to be tested which has been loaded in the emergency channel to the sampling area.

In some embodiments, the sampling area is in a form of a conveyor belt, and the conveyor belt is movable back and forth in its extension direction in a continuous or step-by-step manner.

In some embodiments, the loading/unloading area includes a loading area and an unloading area which are separately arranged, and a tested sample rack is conveyed to the unloading area by the conveyor belt.

In some embodiments, the loading/unloading area includes a common loading area and unloading area.

In some embodiments, two adjacent rack accommodating sections are arranged in the sampling area, wherein the sample rack is loaded in one of the rack accommodating sections for sampling, and the other of the rack accommodating sections provides a backup sampling position.

In some embodiments, the shuttle is configured to: load a next sample rack to be tested onto the other rack accommodating section during a sampling cycle of the automatic testing apparatus; and to unload a tested sample rack from the one rack accommodating section so as to enable the next sample rack to be tested in the backup sampling position to move to the sampling position during sampling interval of the automatic testing apparatus, thereby realizing uninterrupted continuous sampling of the automatic testing apparatus.

In some embodiments, the sample rack manipulation device further includes a buffer area and a transfer area. A label reader is provided in the transfer area and/or the buffer area, and the label reader is configured to read a label attached to the sample rack and/or the sample container to obtain rack identification information and/or sample identification information related to the sample rack.

In some embodiments, the sample rack manipulation device may further include a controller, which is configured to determine, based on the read information, testing priorities of the individual sample racks to be tested, and determine a transferring and testing order of the sample racks to be tested, wherein the shuttle is configured to, based on the determined transferring and testing order, transfer the multiple sample racks to be tested in the buffer area to the sampling area for sampling.

In some embodiments, the loading/unloading area and the buffer area may be symmetrically arranged with respect to the transfer area and may be configured to have the same sample rack loading capacity.

In some embodiments, the loading/unloading area may include a first rack tray which defines multiple channels for accommodating multiple sample racks respectively, and the buffer area may include a second rack tray, which defines multiple channels for accommodating multiple sample racks respectively.

In some embodiments, one or more emergency channels are provided on a leftmost side of the first rack tray. The shuttle may be configured to preferentially transfer a sample rack to be tested which has been loaded in the one or more emergency channels to the transfer area and/or the buffer area for reading information, and the controller may be configured to determine that the to-be-tested sample rack coming from the one or more emergency channels and carrying emergency samples has a highest testing priority in default.

In some embodiments, the controller may be configured to: for sample racks having the same testing priority, determine the transferring and testing order based on a sequence of time when the sample racks enter the buffer area.

In some embodiments, the controller described above may further determine a vacancy where no sample container is placed on each of the sample racks based on the sample identification information, so as to skip the vacancy during sampling, and/or sequence testing priorities of multiple sample containers on each of the sample racks based on the sample identification information, so as to sample in sequence.

According to another aspect of the present application, a testing system is provided. The testing system includes: the sample rack manipulation device including the label reader as described above; and an automatic testing apparatus configured to sample and test with respect to the sample container located at a sampling position in the sampling area of the sample rack manipulation device.

In some embodiments, the sample rack manipulation device includes a first sampling area and a second sampling area located at two sides respectively, and the automatic testing apparatus includes a first testing apparatus configured to sample from the first sampling area and a second testing apparatus configured to sample from the second sampling area.

In some embodiments, the first testing apparatus is a clinical chemical testing apparatus, and the second testing apparatus is an immunoassay testing apparatus.

In some embodiments, the sampling cycle of the first testing apparatus is different from that of the second testing apparatus.

According to yet another aspect of the present application, a method for conveying a sample for test for an automatic testing apparatus is provided. The method includes: loading multiple sample racks to be tested, wherein each of the sample racks is configured to carry one or more sample containers containing samples; reading rack identification information and sample identification information related to each of the sample racks to be tested; transferring the sample racks to be tested to a buffer area which is a working area shared with the loading/unloading area of the sample racks or a separately arranged working area different from the loading/unloading area of the sample racks; determining testing priorities of the respective sample racks to be tested based on the read information, and determining a conveying order of the multiple to-be-tested sample racks in the buffer area; and conveying, based on the determined conveying order, the multiple to-be-tested sample racks in the buffer area for test.

In some embodiments, the method for conveying a sample for test may further include: determining a vacancy where no sample container is placed on each of the sample racks based on the sample identification information, so as to skip the vacancy during sampling and/or sequencing testing priorities of multiple sample containers on each of the sample racks so as to sample in sequence.

In some embodiments, reading the rack identification information and the sample identification information may include: reading a label in the form of an RFID label, a barcode or a two-dimensional code attached to the sample rack and/or the sample container.

In some embodiments, a sample rack to be tested which has been loaded in an emergency channel may have a highest testing priority in default.

In some embodiments, for sample racks having a same testing priority, the conveying order may be determined based on a sequence of time when the sample racks enter the buffer area.

In some embodiments, for a sample rack involving multiple testing items, testing priorities and conveying orders of the sample rack in terms of the multiple testing items may be separately determined, and the sample rack may be conveyed for test in sequence in an order of time of conveying.

In some embodiments, the method for conveying a sample for test may further include: loading a next sample rack to be tested onto a backup sampling position during a sampling cycle of the automatic testing apparatus; and unloading a tested sample rack from the sampling position and moving the next sample rack to be tested to the sampling position during the sampling interval of the automatic testing apparatus.

According to still yet another aspect of the present application, a computer-readable medium having programs stored thereon are provided. The programs, when being executed by a processor, implement the method for conveying a sample for test as described above.

### Technical Effects

With the sample rack manipulation device according to the present application, it is allowed to set the conveying-to-test order of the sample racks as required, and the sample rack manipulation device has strong compatibility; the working capacity can be improved, while the flexibility and complexity of the random moving route of the sample racks can be reduced, which improves the flexibility of the testing system, meets the requirements of integrated design of the testing apparatus, and greatly improves the energy efficiency and applicability of the testing system, thereby having a wide application prospect.

### BRIEF DESCRIPTION OF THE DRAWINGS

Features, advantages, and technical and industrial significance of exemplary embodiments of the present application will be described below with reference to the accompanying drawings, in which the same reference numerals indicate the same parts. In the drawings:
FIG. 1 schematically shows a configuration of a testing system including a sample rack manipulation device according to an embodiment of the present application;
FIG. 2 is a plan view showing an exemplary configuration of a testing apparatus that can be used in combination with the sample rack manipulation device according to an embodiment of the present application;
FIG. 3 is a schematic plan view of the sample rack manipulation device according to an embodiment of the present application;
FIGS. 4a to 4c are plan views similar to FIG. 3, showing a transfer process of a to-be-tested sample rack for conveying and testing;
FIGS. 5a to Sf are plan views similar to FIG. 3, showing loading process of the to-be-tested sample rack and unloading process of a tested sample rack;
FIG. 6 shows a flowchart of a testing method according to an embodiment of the present application; and
FIG. 7 shows an example of a label reader according to an embodiment of the present application.

### DETAILED DESCRIPTION OF THE EMBODIMENTS

The following description is merely exemplary in nature and is not intended to limit the present application and the application or use thereof. It should be understood that the drawings are schematic, and are unnecessarily drawn in scale.

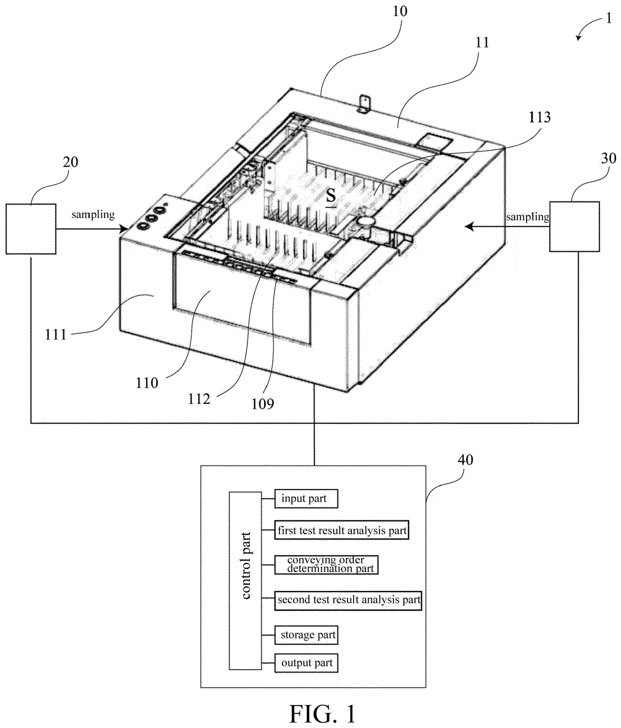

A sample rack manipulation device 10 according to an embodiment of the present application and a testing system 1 using the sample rack manipulation device 10 will be described below with reference to FIGS. 1 to 3.

As shown in FIG. 1, the testing system 1 includes a housing (not shown), a first testing apparatus 20 and a second testing apparatus 30 which are accommodated in the housing, a sample rack manipulation device 10 located between the first testing apparatus 20 and the second testing apparatus 30, a controller 40 in communication with the testing apparatus 20, the testing apparatus 30 and the sample rack manipulation device 10, and a sample rack 50 carrying samples. The cooperation therebetween enables the testing system 1 to automatically perform test and analysis on multiple samples in terms of clinical chemistry, immunology or genetics.

### Sample rack

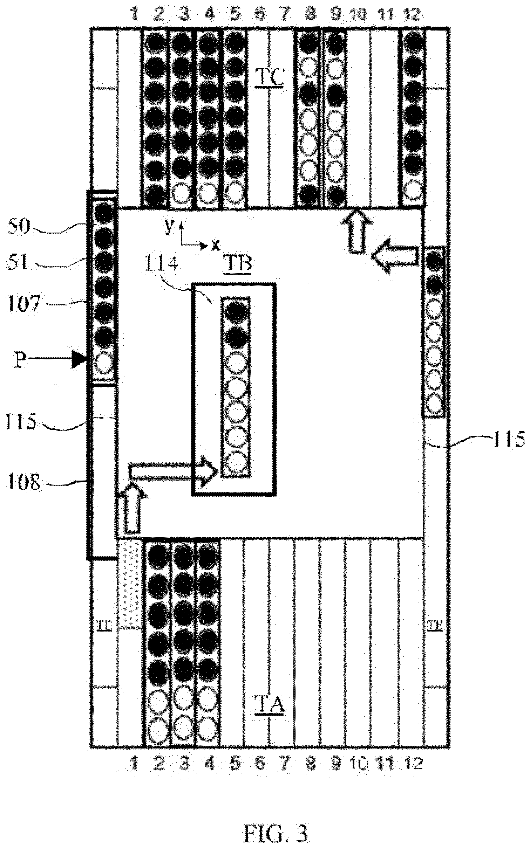

The sample rack 50 is configured to receive, support, align and hold one or more sample containers 51 containing samples. The sample containers 51 are arranged in a row on the sample rack 50. The number of the sample containers 51 that can be carried on one sample rack 50 is typically six to ten. Seven sample containers 51 are shown in the drawings. The number of sample containers may be determined based on a combination of factors such as the size of the apparatus and the waiting time for a next sample rack to be fed. It will be appreciated that there is no limit to the number of sample containers in the present application. However, the number of the sample containers 51 actually loaded on the sample rack 50 may be determined according to actual situations. As clearly shown in FIG. 3, solid circles on the sample rack 50 indicate the loaded sample containers 51, and hollow circles indicate that no sample container is loaded.

The sample rack 50 may be a sample rack that is universal for commonly used sample containers such as test tubes or cups, and the universal sample rack 50 may be purchased from Beckman Coulter, Inc.

A RFID (Radio Frequency Identification, not shown) label is attached to each sample rack 50 and each sample container 51 on the sample rack. The RFID label on the sample rack 50 may contain rack identification information related to the sample rack, and the RFID label on the sample container 51 may contain sample identification information related to the sample in the sample container. The RFID label may be placed near the bottom of the sample rack, so that the rack identification information and the sample identification information on the RFID label can be automatically read and identified when the sample rack 50 passes through an RFID label reader (which will be described later). By adjusting the transmission power of an RFID antenna, adjacent RFID labels will not be accidentally read at the same time.

### Testing apparatus

The first testing apparatus 20 and the second testing apparatus 30 may be any suitable common automatic testing apparatus for testing or processing biological samples or other chemical samples. For example, the first testing apparatus 20 may be a clinical chemistry (CC) testing apparatus, and the second testing apparatus 30 may be an immunoassay (IA) testing apparatus.

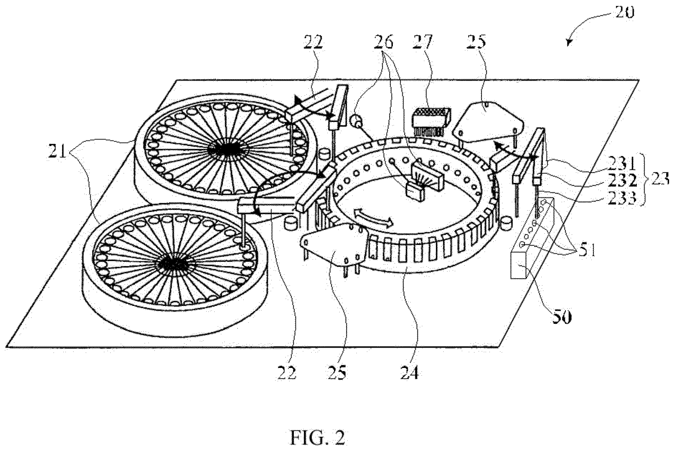

FIG. 2 shows an example of a typical CC testing apparatus 20. The CC testing apparatus 20 may include, for example, a reagent storage device 21, a reagent dispenser 22, a sample dispenser 23, a reaction table 24, a mixing device 25, an optical analysis instrument 26, a cleaning mechanism 27, and the like.

The reagent storage device 21 may be one or more circular holders on which multiple reagent containers for storing reagents are arranged in a circumferential direction. The reagent storage device 21 can be rotated by being driven by, for example, a motor to transfer the reagent containers in the circumferential direction. A thermostatic bath (not shown) for cooling reagents may be arranged below the reagent storage device 21.

The reaction table 24 may be also a circular holder, on which multiple reaction containers are arranged in a circumferential direction. Required chemical reactions may be performed on multiple to-be-tested samples and reagents in the corresponding multiple reaction containers, respectively. The reaction table 24 may be rotated by being driven by, for example, a motor, which may be a motor different from that driving the reagent storage device 21, to move the reaction container in the circumferential direction. A thermostatic bath (not shown) for heating the reaction table 24 to accelerate the reaction between the sample and the reagent may be arranged below the reaction table 24. It can be understood that the reaction table may also be a device for performing other processing on samples for test and analysis.

The sample dispenser 23 includes a support rod 231, an arm portion 232 protruding from an upper end of the support rod 231, and a sampling needle 233 provided at a free end of the arm portion 232. The arm portion 232 can move linearly together with the support rod 231, rotate around the support rod 231, and ascend and descend vertically by means of the support rod 231 to move the sampling needle 233 between a sampling position and a sample-discharging position. At the sampling position, the sampling needle 233 sucks an appropriate amount of sample from the sample container 51 which is moved to the sampling position by the sample rack manipulation device 10 (which will be described later), and at the sample-discharging position, the sample sucked by the sampling needle 233 is discharged into the reaction container.

The reagent dispenser 22 may have a structure similar to that of the sample dispenser 23, or both of them may be in any other suitable form of dispenser used in the conventional technology, and will not be described in detail here.

After the sample and the reagent are dispensed to the reaction container by respective dispensers, the sample and the reagent are uniformly mixed and reacted in the reaction container by the mixing device 25. Then, liquid, obtained from the reaction between the reagent and the sample, in the reaction container is optically analyzed by the optical analysis instrument 26 and the analysis result is output to the controller 40.

The cleaning mechanism 27 includes a part for cleaning the sampling needle 233 of the sample dispenser 23, a part for cleaning the sampling needle of the reagent dispenser 22 and a part for cleaning the reaction container, so as to avoid inaccurate measurement results caused by cross contamination.

Similar to the CC testing apparatus 20, the IA testing apparatus 30 also interacts with the sample rack manipulation device 10 at the sampling position to transfer samples.

However, it can be understood that the testing apparatus according to the present application is not limited to the CC testing apparatus and the IA testing apparatus described above, and the first testing apparatus 20 and the second testing apparatus 30 may be different or the same, as long as the testing apparatus can be used in combination with a sample rack manipulation device that supplies a to-be-tested sample by means of a sample rack.

### Sample rack manipulation device

As shown in FIG. 1, the sample rack manipulation device 10 includes a housing 11 and a substantially rectangular inner space S enclosed by the housing 11. For convenience of description, a length direction of the rectangle is defined as the longitudinal direction (y-axis direction in a transfer area shown in FIG. 3) and a width direction of the rectangle is defined as the transverse direction (x-axis direction in the transfer area shown in FIG. 3). With reference to FIG. 3, the internal space S of the sample rack manipulation device 10 is divided into five areas, namely, sampling areas TD and TE extending in the longitudinal direction, and a loading/unloading area TA, an intermediate transfer area TB and a buffer area TC which are sandwiched between the sampling area TD and the sampling area TE. The housing 11 may include a top wall made of an opaque or translucent plastic panel, and the top wall may be fixed to side walls of the housing 11 by screws or the like, so as to facilitate the maintenance of the above different areas of the internal space S.

A to-be-tested sample rack is firstly loaded in the loading/unloading area TA, enters the transfer area TB where the information on the RFID label is read, then is transferred to the buffer area TC, and then transferred from the buffer area TC via the transfer area TB to the sampling areas TD and TE, respectively corresponding to the first testing apparatus 20 and second testing apparatus 30 on two sides, for sampling and testing. The tested sample rack, via the transfer area TB again, returns to the buffer area TC to wait for the test result. If there is no new testing demand, the tested sample rack will finally return to the loading/unloading area TA for unloading. If there is a new testing demand, the tested sample rack will wait to be conveyed to the sampling area TD or TE again for sampling and testing. Alternatively, the tested sample rack may be directly returned from the sampling area TD or TE via the transfer area TB to the loading/unloading area TA.

The configuration of the above five areas will be described in detail below.

The loading/unloading area TA, a rectangular area arranged next to a front wall 111 of the housing 11, is arranged at a front part of the internal space S of the sample rack manipulation device 10. The rectangular area is sized to allow multiple (twelve as shown in drawings) sample racks 50 to be arranged side by side in the transverse direction. A first rack tray 112 is arranged in the loading/unloading area TA and defines corresponding multiple channels (channel 1 to channel 12) for placing the multiple sample racks 50.

A door 110 is provided on the front wall 111 of the housing 11 at a position corresponding to the loading/unloading area TA. A bottom of the door 110 is pivotably connected to the front wall 111 of the housing 11, thereby the door 110 can pivot outward around the bottom to a horizontal position flush with a bottom of the first rack tray 112, so that an operator can conveniently load the sample rack 50 carrying the sample containers 51 into the channel of the first rack tray 112 in the loading/unloading area TA or unload from the channel of the first rack tray 112.

Each of channel areas at the bottom of the first rack tray 112 is provided with a sensor for detecting whether a sample rack is loaded in the channel. LED indicator lights 109 respectively corresponding to the channels are provided on a top surface of the door 110. Each of the LED indicator lights 109 can display different colors in response to the loading and testing situations of the sample rack in a corresponding channel. When the door 110 is in a closed state, the LED indicator lights 109 face the operator, and the operator can determine the loading and testing situations of the sample rack in each channel based on the color of the LED indicator light 109 corresponding to the channel, including a situation in which no sample rack is loaded, a situation in which the to-be-tested sample rack is loaded, and a situation in which the tested sample rack is loaded.

Corresponding to the loading/unloading area TA, the buffer area TC is arranged at a rear part of the internal space S of the sample rack manipulation device 10 for temporarily storing the to-be-tested sample rack of which the information has been read. Except that an LED indicator light for the inspection of an operator is not provided, the size and arrangement of the buffer area TC are substantially the same as those of the loading/unloading area TA. A second rack tray 113 is provided in the buffer area TC. The second rack tray 113 defines multiple channels with the same number as those in the loading/unloading area TA, so as to allow multiple sample racks 50 with the same number to be arranged side by side in the transverse direction.

The first rack tray 112 and the second rack tray 113 may be integrally formed with the housing 11, or may be separately formed and fixed to the housing 11.

The transfer area TB is arranged between the loading/unloading area TA and the buffer area TC. The dimension of the transfer area TB in the longitudinal direction is set to be slightly larger than the longitudinal length of the sample rack 50 to allow the sample rack 50 to freely moving in the transfer area TB along the x-axis direction. It should be noted that the sample rack 50 is always oriented in the longitudinal direction in line with the y-axis direction during the whole testing process, i.e., in the sample rack manipulation device 10.

A shuttle 114 is provided in the transfer area TB. The shuttle 114 is controlled by an x-axis motor, a y-axis motor and a vertical motor which are separately arranged. With the driving of these motors, the translation of the shuttle 114 in the x-axis direction in the transfer area TB, the expansion and contraction of an operating rod and the sample rack 50 in the y-axis direction, and the ascending and descending of the operating rod in an vertical direction perpendicular to the x-axis and the y-axis can be realized. As a result, the shuttle 114 can pull the sample rack 50 out of the channel of the loading/unloading area TA or the buffer area TC and remain the sample rack 50 fixed on the shuttle 114, can move back and forth in the x-axis direction in the transfer area TB while carrying the sample rack 50, can insert the carried sample rack 50 into the channel of the loading/unloading area TA or the buffer area TC, and can unload the carried sample rack 50 in one of the sampling areas TD and TE on two sides, thereby enabling the sample rack 50 to be transferred between five working areas of the sample rack manipulation device 10.

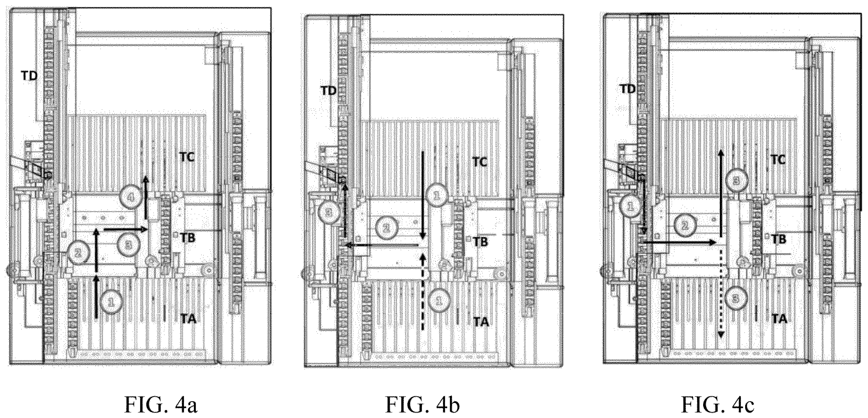

In a case that the buffer area TC is not fully loaded, the shuttle 114 may transfer the to-be-tested sample rack in the loading/unloading area TA to the buffer area TC to wait for testing. The process is shown in FIG. 4a. The to-be-tested sample rack 50 is firstly transferred from the loading/unloading area TA to the transfer area TB by the shuttle 114 in the transfer area TB. In the transfer area TB, the rack identification information and the sample identification information are read by the RFID label reader, and then the to-be-tested sample rack 50 carried by the shuttle 114 is transferred to an unloaded channel in the buffer area TC and is inserted into the channel by the shuttle 114 moving in the x-axis direction in the transfer area TB, thereby completing the transferring of the to-be-tested sample rack from the loading/unloading area TA to the buffer area TC.

To-be-tested sample racks in the loading/unloading area TA may be arranged in sequence or out of order in the process of loading. No matter whether the to-be-tested sample racks are arranged in sequence or out of order, for the sample racks 50 loaded in a same batch, the shuttle 114 transfers from the loading/unloading area TA to the buffer area TC in the order from left to right (from channel 1 to channel 12), as shown in the figure; and for the sample racks 50 loaded in different batches, the shuttle 114 also transfers from the loading/unloading area TA to the buffer area TC in batches in the order from left to right. In this way, it can be avoided that the sample racks in top predetermined number of loading batches but in the right of the loading channel cannot be transferred to the buffer TC in time for testing.

According to an embodiment of the present application, the RFID label reader may be integrated on the shuttle 114. In a process in which the shuttle 114 lifts the sample rack 50 out of the channel in the loading/unloading area TA and loads the sample rack 50 on the shuttle 114, the sample rack 50 is firstly pulled to a label reading starting position where the RFID label reader is arranged, and then the sample rack 50 passes through the label reading starting position in a step-by-step manner, so that the information on the RFID labels can be read one by one, and the read information may be transmitted to the controller 40. Integrating the label reader on the shuttle and allowing direct reading of the sample rack loaded on the shuttle makes it possible for the compact and smooth spatial layout of the sample rack manipulation device 10.

When the sample rack 50 is completely transferred from the loading/unloading area TA to the shuttle 114 in the transfer area TB, the label reading ends. The shuttle 114 moves in the x-axis direction and transfers the sample rack 50 to a nearest unloaded channel in the buffer area TC, and then inserts the sample rack 50 into the channel.

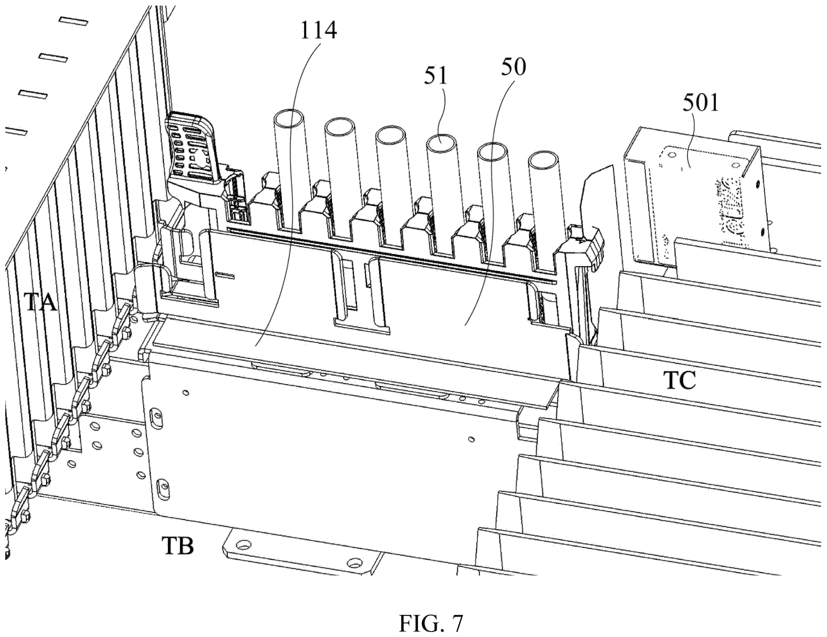

According to an alternative embodiment shown in FIG. 7, the RFID label reader 501 may be arranged at a position, adjacent to the buffer area TC, of the transfer area TB. In this way, in a process in which the shuttle 114 unloads the sample rack 50 from the shuttle 114 to the channel in the buffer area TC, the sample rack 50 is firstly pulled to the label reading starting position where the RFID label reader 501 is arranged, and then the sample rack 50 passes through the label reading starting position in a step-by-step manner, so that the information on the RFID labels can be read one by one, and the read information can be transmitted to the controller 40. After the information on the labels of the sample rack 50 and each of the sample containers 51 is read, the sample rack 50 is loaded onto the shuttle 114, and then transferred by the shuttle 114 to another unloaded channel in the buffer area TC to wait for sampling. It should be understood that the position of the label reader 501 is not limited to the specific example shown in the drawings, for example, the label reader 501 may be completely located in the transfer area TB or completely located in the buffer area TC.

The controller 40 determines a testing priority of a current sample rack 50 based on the rack identification information and the sample identification information received from the RFID label reader, and accordingly determines a conveying-to-test order of the sample rack 50 among all the sample racks 50, of which priorities have been determined, loaded in the buffer area TC. For example, the testing priorities of the sample racks may be determined as four grades from low to high, the sample rack with a high grade may be conveyed for testing firstly, and the sample racks with the same grade may be further sorted based on the loading batch or even the loading time of the same batch, thereby determining the conveying-to-test order of multiple to-be-tested sample racks. Of course, the division of the above four grades is only exemplary, and the number of the grades may be appropriately determined based on, for example, the capacity of the to-be-tested sample racks in the buffer area and the difficulty of grade division. For example, the number of the grades may be any natural number greater than or equal to 2.

In addition to the above methods, the controller 40 may also determine the testing priorities of the to-be-tested sample racks based on any other suitable standards, which are easily understood by those skilled in the art according to actual needs by reading the present application, and therefore fall within the scope of the present application. For example, one or two channels can be designated as an emergency channel in the loading/unloading area TA, and the shuttle 114 may preferentially transfer the to-be-tested sample rack loaded in the emergency channel and read information. When the read sample identification information indicates that the to-be-tested sample rack coming from the emergency channel carries an emergency sample, the controller 40 determines in default that the to-be-tested sample rack coming from the emergency channel and carrying the emergency sample has the highest testing priority. In some examples, the emergency channel may even be used only for processing the emergency sample. For the to-be-tested sample rack in the emergency channel, the controller 40 may directly determine that the to-be-tested sample rack has the highest testing priority and arrange it to be firstly conveyed for testing, without further consideration of the rack identification information and the sample identification information. Since the shuttle 114 takes the to-be-tested sample racks from the loading/unloading area TA in the order from left to right, the leftmost channel 1 and/or channel 2 in the loading/unloading area is usually used as the emergency channel.

When it is required to transfer the next to-be-tested sample rack from the buffer area TC to the sampling area TD or the sampling area TE for sampling and testing, the controller 40 sends an instruction to the shuttle 114 based on the conveying-to-test order and the testing content, to inform the number (from channel 1 to channel 12) of the channel in the buffer area where the next to-be-tested sample rack is located and the target sampling area, and the shuttle 114 conveys the designated sample rack to the target sampling area based on the instruction. The transfer process is shown by the solid arrow in FIG. 4b. As the structures and functions of the sampling area TD and the sampling area TE are similar, only the sampling area TD will be described as the target sampling area, and the situation of the sampling area TE is similar. First, the designated sample rack 50 is taken out from the buffer area TC to the shuttle 114 in the transfer area TB, is conveyed to the target sampling area TD by the shuttle 114, and is transferred to the sampling position P for sampling in the sampling area TD.

The sampling areas TD and TE are respectively arranged on two sides in the transverse direction of the loading/unloading area TA, the transfer area TB and the buffer area TC arranged side by side. The sampling areas TD and TE are in the form of a conveyor belt extending in the longitudinal direction, and the transverse width of the conveyor belt is set to a width allowing only one sample rack to be accommodated, and the conveyor belt is movable forward and backward in the y-axis direction in a continuous manner or in a step-by-step manner.

When the to-be-tested sample rack 50 is transferred from the buffer area TC to the sampling area TD by the shuttle 114, the conveyor belt moves upward to conveys the sample rack 50 to the sampling position P. As described above, at the sampling position P, the sampling needle 233 of the sample dispenser 23 of the CC testing apparatus 20 sucks the sample from the sample container 51, located at the sampling position P, on the sample rack 50, and then transfers the sucked sample to the first testing apparatus 20 for CC testing. That is, the sampling position P becomes an interface for associating the sample rack manipulation device 10 with the testing apparatuses 20 and 30. When the sample containers 51 on the sample rack 50 is being sampled one by one, the conveyor belt moves in a step-by-step manner by an interval distance between two adjacent sample containers at each time, thereby simplifying the positioning operation by means of a sensor.

When the sampling of all samples on the sample rack 50 is completed, the conveyor belt conveys the tested sample rack down to an interface 115 (see FIG. 3) between the transfer area TB and the sampling area TD, and then the tested sample rack will be carried away by the shuttle 114 and be conveyed back to the unloaded channel in the buffer area TC via the transfer area TB to wait for the test results, as shown by the solid arrows in FIG. 4c. If there is no new testing demand, the shuttle 114 transfers the tested sample rack in the buffer area TC to the loading/unloading area TA for unloading. If there is still a new testing demand (either the same CC testing or a different IA testing), the tested sample rack that has undergone one test waits in the buffer area TC to be conveyed again to the sampling area TD or TE for the next sampling and testing. Alternatively, if repeated testing is not required, the tested sample rack may be returned directly from the sampling area TD or TE to the loading/unloading area TA via the transfer area TB, as shown by the dashed arrow in FIG. 4c.

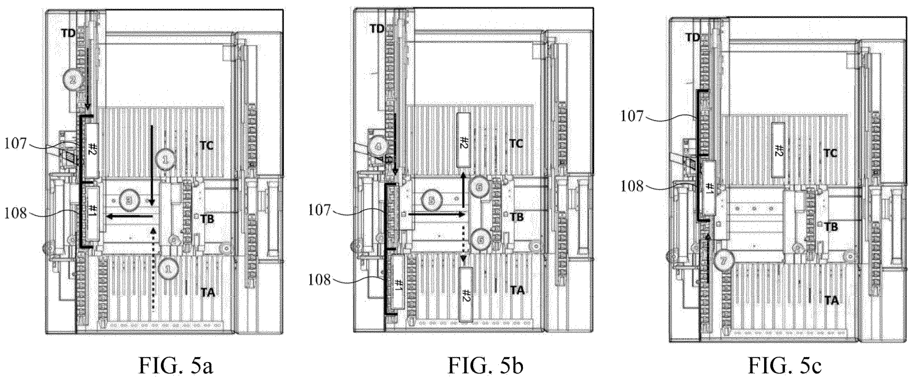

In addition, for the need of compact space design, the shuttle 114 and its transfer path are unidirectional, and in order to meet the testing speed throughput requirements of the testing apparatus and improve the efficiency of circulation of the sample rack, the conveyor belt according to the embodiment of the present application is continuously formed with an upper rack accommodating section 107 and a lower rack accommodating section 108 at intermediate positions to provide a standby position for the next to-be-tested sample rack. The conveyor belt allows receiving the sample rack 50 from the shuttle 114 in the transfer area TB or conveying the tested sample rack 50 back to the shuttle 114 in the transfer area TB only when the upper rack accommodating section 107 or the lower rack accommodating section 108 is aligned with the interface 115. In this case, it is conceivable to complete the replacement of the tested sample rack and the next to-be-tested sample rack in a short testing interval after the testing apparatus completes the sampling, so as to achieve continuous operation of the testing apparatus. Reference is made to FIGS. 5a to 5f for specific operations.

First, with reference to the process shown in FIGS. 5a to 5c, a 2# sample rack is being sampled in the upper rack accommodating section 107 in the sampling area TD, the lower rack accommodating section 108 is in an unloaded state, and the 1# sample rack in the buffer area TC is the next to-be-tested sample rack. In this case, as shown in FIG. 5a, when the sampling operation on the 2# sample rack is about to be completed, the shuttle 114 moves the 1# sample rack out of the buffer area TC and transfers the 1# sample rack to the interface 115. During the testing interval after the sampling operation on the 2# sample rack is completed, the lower rack accommodating section 108 is moved to the position directly facing the interface 115, and the 1# sample rack is loaded to the lower rack accommodating section 108 by the shuttle 114. Next, as shown in FIG. 5b, the conveyor belt moves downward to align the upper rack accommodating section 107 with the interface 115, and the shuttle 114 removes the 2# sample rack from the upper rack accommodating section 107 and conveys the 2# sample rack back to the buffer area TC. At the same time, as shown in FIG. 5c, the conveyor belt moves upward to send the 1# sample rack in the lower rack accommodating section 108 to the sampling position for sampling.

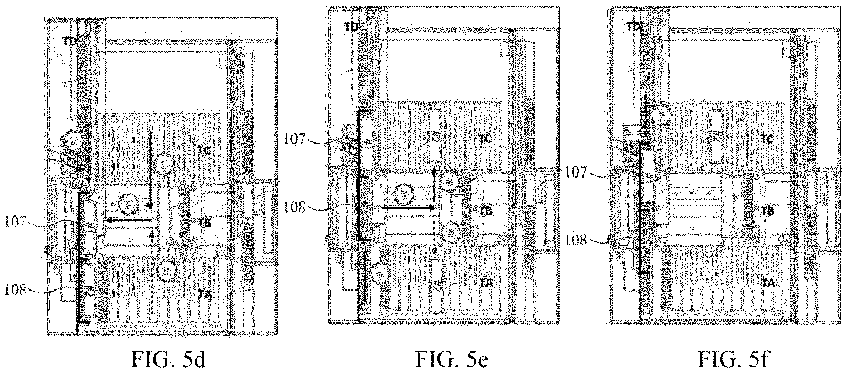

Next, with reference to the process shown in FIGS. 5d to 5f, a 2# sample rack is being sampled in the lower rack accommodating section 108 in the sampling area TD, the upper rack accommodating section 107 is in an unloaded state, and the 1# sample rack in the buffer area TC is the next to-be-tested sample rack. In this case, as shown in FIG. 5d, when the sampling operation on the 2# sample rack is about to be completed, the shuttle 114 moves the 1# sample rack out of the buffer area TC and transfers the 1# sample rack to the interface 115. During the testing interval after the sampling operation on the 2# sample rack is completed, the upper rack accommodating section 107 is moved to the position directly facing the interface 115, and the 1# sample rack is loaded to the upper rack accommodating section 107 by the shuttle 114. Then, as shown in FIG. 5e, the conveyor belt moves upward to align the lower rack accommodating section 108 with the interface 115, and the shuttle 114 removes the 2# sample rack from the lower rack accommodating section 108 and conveys the 2# sample rack back to the buffer area TC. At the same time, as shown in FIG. 5f, the conveyor belt conveys the 1# sample rack in the upper rack accommodating section 107 to a suitable sampling position for sampling.

In the above process, the next to-be-tested sample rack is transferred to the interface 115 in advance, and during the testing interval after the sampling operation on the previous sample rack is completed, another rack-free accommodating section is moved to the interface 115 to load the waiting next to-be-tested sample rack, and then the tested sample rack is unloaded. In this way, the transferring of the next to-be-tested sample rack from the buffer area TC to the interface 115 between the sampling area TD and the transfer area TB may be carried out at the same time as the sampling operation on the previous sample rack, and the returning of the tested sample rack may be carried out at the same time as the sampling operation on the next to-be-tested sample rack, thereby greatly shortening the waiting sampling time of the next to-be-tested sample rack. Accordingly, the shuttle 114 is further designed to meet the operation time requirements of the loading/unloading. Therefore, uninterrupted continuous operation of the testing apparatus is realized.

The sampling position P is usually selected in a way that the sampling of a first sample of the sample rack 50 is started from a sample container in a nearly middle position of the sample rack 50, rather than the sampling of the first sample of the sample rack 50 is started from the sample containers located at two ends of the sample rack 50. Therefore, the moving distance of the sample rack can be reduced and the waiting sampling time of the next sample rack can be shortened. The sampling position P can be appropriately determined based on the number of the sample containers 51 carried on the sample rack 50 or the longitudinal dimension of the conveyor belt.

It can be seen that the present application can achieve at least the following outstanding beneficial effects through the embodiments of the sample rack manipulation device 10 described above.
(1) The respective testing priorities of multiple to-be-tested sample racks can be determined based on the rack identification information and/or the sample identification information, and then the conveying-to-test order of the multiple to-be-tested sample racks can be determined based on the testing priorities. In addition, in the process of confirming the testing priorities of the sample racks mentioned above, the controller may further sort the testing priorities of multiple sample containers on the sample rack based on the sample identification information, so that in the sampling of the samples on the sample rack conveyed for test, the samples are sequentially sampled based on the testing priorities of the sample containers. In other words, the sample rack manipulation device 10 according to the embodiment of the present application not only allows the sample racks to be conveyed for test in sequence based on the testing priorities of the sample racks, but also allows the samples to be sampled in sequence based on the testing priorities of the samples on the sample rack conveyed for test, thereby greatly improving the flexibility and applicability of the testing system, shortening the waiting time of emergency samples and thus facilitating to improve the user experience. In addition, the controller may further determine the vacancy where no sample container is placed on each sample rack based on the sample identification information, so as to skip the vacancy during sampling. That is, the to-be-tested sample rack may be non-fully loaded. For example, in an example where the sample rack can carry seven sample containers, the to-be-tested sample rack is allowed to carry one to seven sample containers.
(2) In this embodiment, the loading/unloading area TA and the buffer area TC are each equipped with twelve sample rack loading channels, and the sample rack loading capacity of the whole sample rack manipulation device 10 reaches 24. Compared with the sample rack manipulation device having separate loading area and unloading area but without a buffer area, the sample rack manipulation device 10 according to the present application has a multiple-times increased sample rack loading capacity, the efficiency of the whole testing system is greatly improved, and thus labor can be saved. During the operation of the testing system 1, the operator can unload the tested sample racks in the loading/unloading area TA individually or in batches based on the indication of the LED indicator light 109, and load a new to-be-tested sample rack, as long as the number of the sample racks loaded in the whole device does not exceed 24. The system can indicate the operator that the system is fully loaded when the system reaches the maximum loading capacity based on signals provided by the sensors at the stations.
(3) Flexible route design is allowed while the loading capacity is improved. Although the basic transfer route has been described above, the design concept of the present application allows more complicated random route design. For example, in a case that the buffer area is full-loaded, the shuttle can transfer a newly loaded to-be-tested sample rack from the loading/unloading area TA to the transfer area TB, and the rack identification information and the sample identification information are read by the label reader in the transfer area TB, and then the to-be-tested sample rack is conveyed back to the loading/unloading area TA. At this time, the information and the positioning of the to-be-tested sample rack have been stored in the controller 40, and the to-be-tested sample rack may participate in the sequencing and waiting for testing. The route is especially beneficial to the design with an emergency channel. In this case, as shown by the dashed arrows in FIG. 4b, FIG. 5a and FIG. 5d, the next to-be-tested sample rack to be conveyed for sampling may come from the loading/unloading area TA. In addition, as mentioned above, the sample rack that has undergone one test can be sent back to the buffer area TC to wait for the test result. In a case that it is determined that the samples on the sample rack need to undergo one or more the same or different test, the sample rack will wait in the buffer area TC for the next conveying for test, otherwise the sample rack will be transferred to the loading/unloading area TA for unloading. For example, in a case that the CC testing and IA testing in the embodiment need to be performed on the same sample rack, the sample rack will participate in the sequencing of the two tests separately, and first-arriving one will be tested first. After a first test is completed, the sample rack will be returned to the buffer area TC to wait for a second test, as shown by the solid arrows in FIG. 4c, FIG. 5b and FIG. 5e. However, in the case that multiple testing are not needed, the tested sample racks can be simply transferred directly from the sampling area TD or TE to the loading/unloading area TA for unloading, as shown by the dashed arrows in FIG. 4c, FIG. 5b and FIG. 5e.
(4) The arrangement of the buffer area and two separate sampling areas makes the sample rack manipulation device 10 well compatible and enables the integration of different testing apparatuses in one system to share the loading/unloading area, the transfer area and the buffer area. It is well known that the sampling cycles and the testing cycles of different testing apparatuses are different. Taking the two testing apparatuses in the embodiment as examples, the sampling cycle of a single sample tested by the CC testing apparatus is about, for example, 9 seconds, and the sampling cycle of a single sample tested by the IA testing apparatus is slightly longer, for example, about 36 seconds. Simple sequential transferring is performed in conventional sample rack manipulation device, which makes it difficult to realize the combination and integration of different testing apparatuses. For the sample rack manipulation device 10 according to the present application, the testing apparatuses can be combined as long as the testing apparatuses can realize sample transferring in the sampling area.

### Controller

A microcomputer is used as the controller 40 of the testing system 1. The controller 40 includes a control part, an input part, a first test result analysis part for a first testing apparatus, a second test result analysis part for a second testing apparatus, a conveying order determination part for a sample rack manipulation device, a storage part, and an output part. The control part is connected with the testing apparatus, the sample rack manipulation device and other parts of the controller and controls their operations. The test result analysis part and the conveying order determination part execute specific algorithms and programs based on data from the input part, various sensors, an analytical instrument, a label reader and the like to realize functions of analyzing a test result and determining the conveying order, and a analysis report and a determination result are output through the output part, such as a display and a printer. The storage part is used to store various programs and data which are required.

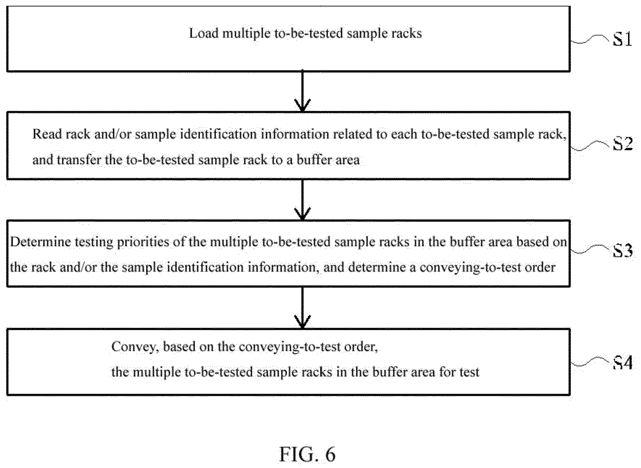

The sample testing method shown in FIG. 6 can be executed by the testing system 1 described in the above embodiment. First, multiple to-be-tested sample racks are loaded in the loading/unloading area of the sample rack manipulation device (step S 1). Next, in the transfer area, rack identification information and/or sample identification information of each to-be-tested sample rack is read by the label reader, and the to-be-tested sample rack of which the information is read is transferred to the buffer area by the shuttle (step S2). The controller determines the testing priority of the corresponding to-be-tested sample rack based on the read rack identification information and/or sample identification information, and then determines the conveying-to-test order of multiple to-be-tested sample racks in the buffer area (step S3). Then, the shuttle in the transfer area, based on the conveying-to-test order determined by the controller, transfers the multiple to-be-tested sample racks in the buffer area to the sampling area for sampling and testing by the testing apparatus (step S4).

Although in the given embodiment, the first testing apparatus 20 and the second testing apparatus 30 are respectively provided on two sides of the sample rack manipulation device 10. However, the present application is not limited to this, and the sample rack manipulation device 10 according to the present application may interact with a testing apparatus only on one side. In this case, accordingly, the sample rack manipulation device 10 may be provided with only one sampling area TD.

In the given embodiment, the loading area and the unloading area of the sample rack are not separately arranged, while their functions are realized by a common loading/unloading area. However, the present application is not limited to this, and a separate unloading area may be additionally arranged in a downstream area of the conveyor belt opposite to an upstream loading area.

In the given embodiment, the loading/unloading area and the buffer area of the sample rack manipulation device are substantially symmetrically arranged, but the buffer area may have a different sample rack capacity from that of the loading/unloading area according to actual situation.

In the given embodiment, an information reading label is in the form of an RFID label, but any suitable label form, such as a two-dimensional code and a bar code, that allows automatic identification and reading of information can be used.

Although some embodiments and variations of the present application have been described in detail, it should be understood by those skilled in the art that the present application is not limited to the embodiments and variations described above, but may include other various possible conjunctions and combinations. Other variations and modifications can be implemented by those skilled in the art without departing from the essence and scope of the present application. All the variations and modifications shall fall within the scope of the present application. Moreover, all the members described herein can be replaced by other technically equivalent members.

## Claims

1. A sample rack manipulation device (10) for an automatic testing apparatus (20, 30), wherein the sample rack manipulation device comprises:
a loading/unloading area (TA) configured to accommodate a plurality of sample racks (50) arranged side by side, wherein each of the plurality of sample racks is configured to carry one or more sample containers (51) containing samples;
a sampling area (TD, TE) in which a sample in each sample container on the sample rack is sampled by the automatic testing apparatus; and
a shuttle (114) configured to transfer the sample rack between the loading/unloading area and the sampling area,
wherein the shuttle is configured to pick out arbitrarily a sample rack to be tested which has been loaded in the loading/unloading area and transfer the picked-out sample rack to be tested to the sampling area for sampling.

2. The sample rack manipulation device according to claim 1, wherein the shuttle is configured to transfer sample racks to be tested which have been loaded in a same batch in the loading/unloading area to the sampling area in an order from left to right.

3. The sample rack manipulation device according to claim 2, wherein an emergency channel is arranged in the loading/unloading area, and the shuttle is configured to preferentially transfer a sample rack to be tested which has been loaded in the emergency channel to the sampling area.

4. The sample rack manipulation device according to any one of claims 1 to 3, wherein the sampling area is in a form of a conveyor belt, and the conveyor belt is movable back and forth in its extension direction in a continuous or step-by-step manner.

5. The sample rack manipulation device according to claim 4, wherein two adjacent rack accommodating sections (107, 108) are arranged in the sampling area, wherein the sample rack is loaded in one of the rack accommodating sections for sampling, and the other of the rack accommodating sections provides a backup sampling position.

6. The sample rack manipulation device according to claim 5, wherein the shuttle is configured to: load a next sample rack to be tested onto the other rack accommodating section during a sampling cycle of the automatic testing apparatus; and to unload a tested sample rack from the one rack accommodating section so as to enable the next sample rack to be tested in the backup sampling position to move to the sampling position during sampling interval of the automatic testing apparatus, thereby realizing uninterrupted continuous sampling of the automatic testing apparatus.

7. The sample rack manipulation device (10) according to claim 1, further comprising: a buffer area (TC) and a transfer area (TB),
wherein a label reader is provided in the transfer area and/or the buffer area, and the label reader is configured to read a label attached to the sample rack and/or the sample container to obtain rack identification information and/or sample identification information related to the sample rack.

8. The sample rack manipulation device according to claim 7, further comprising:
a controller (40) configured to determine, based on the read information, testing priorities of the individual sample racks to be tested, and determine a transferring and testing order of the sample racks to be tested,
wherein the shuttle is configured to transfer, based on the determined transferring and testing order, the sample racks to be tested in the buffer area to the sampling area for sampling.

9. The sample rack manipulation device according to claim 8, wherein
the loading/unloading area comprises a rack tray (112), which defines a plurality of channels for accommodating a plurality of sample racks respectively; and
one or more emergency channels are provided on a leftmost side of a first rack tray, the shuttle is configured to preferentially transfer a sample rack to be tested which has been loaded in the one or more emergency channels to the transfer area and/or the buffer area for reading information, and the controller is configured to determine that the to-be-tested sample rack coming from the one or more emergency channels and carrying emergency samples has a highest testing priority in default.

10. The sample rack manipulation device according to claim 9, wherein the controller is configured to: for sample racks having a same testing priority, determine the transferring and testing order based on a sequence of time when the sample racks enter the buffer area.

11. The sample rack manipulation device according to claim 8 or 9, wherein the controller is configured to further determine a vacancy where no sample container is placed on each of the sample racks based on the sample identification information, so as to skip the vacancy during sampling, and/or sequence testing priorities of a plurality of sample containers on each of the sample racks based on the sample identification information, so as to sample in sequence.

12. A testing system (1), comprising:
the sample rack manipulation device according to any one of claims 1 to 11; and
an automatic testing apparatus configured to sample and test with respect to the sample container located at a sampling position in the sampling area of the sample rack manipulation device.

13. The testing system according to claim 12, wherein,
the sample rack manipulation device comprises a first sampling area and a second sampling area located at two sides respectively, and
the automatic testing apparatus comprises a first testing apparatus configured to sample from the first sampling area and a second testing apparatus configured to sample from the second sampling area.

14. The testing system according to claim 13, wherein the first testing apparatus is a clinical chemical testing apparatus, and the second testing apparatus is an immunoassay testing apparatus.

15. A method for conveying a sample for test for an automatic testing apparatus, comprising:
loading a plurality of sample racks to be tested, wherein each of the sample racks to be tested is configured to carry one or more sample containers containing samples;
reading rack identification information and sample identification information related to each of the sample racks to be tested;
transferring the sample racks to be tested to a buffer area, wherein the buffer area is a working area shared with the loading/unloading area of the sample racks or a separately arranged working area different from the loading/unloading area of the sample racks;
determining testing priorities of the sample racks to be tested based on the read information, and determining a conveying order of the plurality of sample racks to be tested in the buffer area; and
conveying, based on the determined conveying order, the plurality of sample racks to be tested in the buffer area for test.

16. The method for conveying a sample for test according to claim 15, further comprising: determining a vacancy where no sample container is placed on each of the sample racks based on the sample identification information, so as to skip the vacancy during sampling and/or sequencing testing priorities of a plurality of sample containers on each of the sample racks so as to sample in sequence.

17. The method for conveying a sample for test according to claim 15 or 16, wherein a sample rack to be tested which has been loaded in an emergency channel has a highest testing priority in default.

18. The method for conveying a sample for test according to claim 17, wherein for sample racks having a same testing priority, the conveying order is determined based on a sequence of time when the sample racks enter the buffer area.

19. The method for conveying a sample for test according to claim 15 or 16, wherein for a sample rack involving a plurality of testing items, testing priorities and conveying orders of the sample rack in terms of the plurality of testing items are separately determined, and the sample rack is conveyed for test in sequence in an order of time of conveying.

20. The method for conveying a sample for test according to claim 15 or 16, further comprising:
loading a next sample rack to be tested onto a backup sampling position during a sampling cycle of the automatic testing apparatus; and
unloading a tested sample rack from the sampling position and moving the next sample rack to be tested to the sampling position during the sampling interval of the automatic testing apparatus.

21. A computer-readable medium having programs stored thereon, wherein the programs,, when being executed by a processor, implement the method for conveying a sample for test according to any one of claims 15 to 20.
